# EUROPEAN PATENT APPLICATION

(11) **EP 1 205 518 A1**
(43) Date of publication of application: **15.05.2002**
(21) Application number: 01830662.1
(22) Date of filing: 19.10.2001
(51) Int. Cl.: C08L 63/00, C08L 67/00, C08K 7/00

(54) **Material for the production of moulded products**

(30) Priority: 07.11.2000 IT FI000222
(71) Applicant: Cestenoli, Paolo, 50032 Borgo San Lorenzo, Firenze (IT)
(72) Inventor: Cestenoli, Paolo, 50032 Borgo San Lorenzo, Firenze (IT)
(74) Representative: Martini, Lazzaro

(57) **Abstract**

Material for the production of moulded products characterized in that it comprises matter of mineral origin such as stone and/or marble being crushed or powdered and mixed with a chemical binder and a catalyst in predetermined batches.

## Description

The present invention relates to a material for the production of moulded products.

In particular, the present material makes it possible to build artistic products of decorative and ornamental kind, such as coats of arms, statues and panels for both interior and exterior, having the appearance and consistence of products made from materials such as stone and marble.
The material according to the present invention allows, owing to the fact that it can fed into moulds or mould impressions, mass-production of also complex objects over relatively short times, which is impossible to achieve when working natural stone materials which require to be hand-carved.

The present invention comprises the use of raw materials of mineral origins, formed by crushing or powdering the material the appearance of which is to be reproduced, mixed with a chemical binder and a catalyst agent in predetermined batches.
The said materials consist mainly of stone and white marble, both primary and secondary, crushed and/or powdered according to the desired effect. In particular, the white marble, powdered like talc or "impalpable powder", carries out the important function of regulating the colour taken up in the whole by the finished product.
The chemical binder used to make the compound to be introduced in the moulds may be an epoxy or polyester resin, to which a corresponding catalyst is added as an aid to the process for the drying and solidification of the product. The compound may be allowed to solidify within the moulds at ambient temperature for a time of 4-8 hours. It will be appreciated that, in a heated ambient, this time is reduced.
In order to improve the workability of this material and to lighten the finished product, a preset quantity of pumice stone may be added.

The above mentioned components may be mixed both manually, especially when the quantities involved are relatively modest, and mechanically by means of conventional mixers.
By way of non limitative example, the following table indicates the formulations for obtaining the products having the appearance of stone or old marble, with the use of epoxy resin and of polyester resin as well.

Both the epoxy and polyester resins, and relevant catalysts, are of a type usually available on the market. In Italy, these substances are marketed by the company COMMATTINI S.p.A..
It is understood that the term "stone" indicates any aggregate of mineral substances of natural, of eruptive, sedimentary, sandstone formation, and the like.

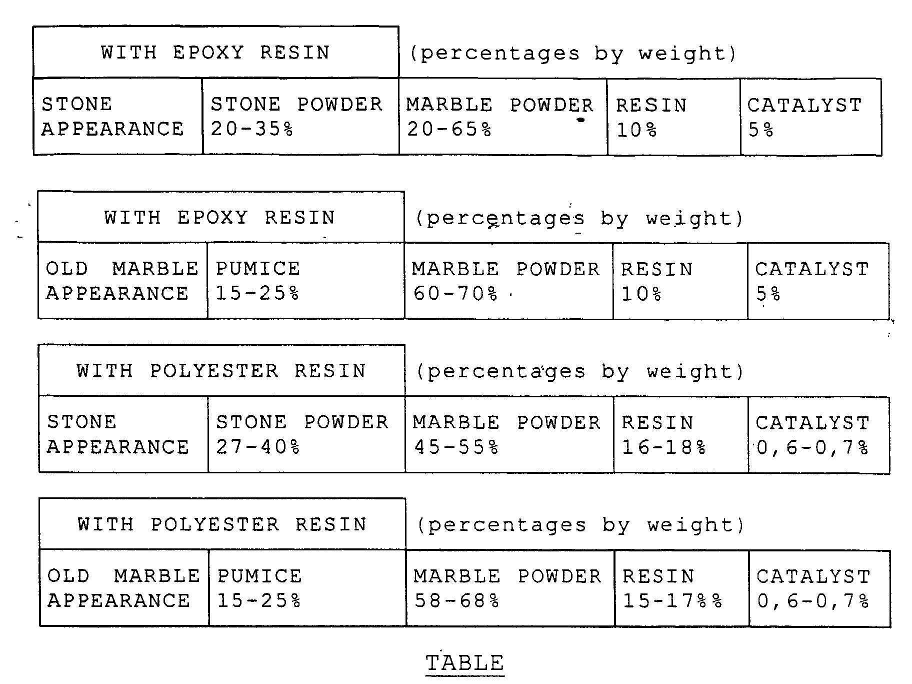

Practically, all the construction details may vary in any equivalent way as far as the shape, dimensions, elements disposition, nature of the used materials are concerned, without nevertheless departing from the scope of the adopted solution idea and, thereby, remaining within the limits of the protection granted to the present patent for industrial invention.

## Claims

1. Material for the production of moulded products **characterized in that** it comprises matter of mineral origin such as stone and/or marble being crushed or powdered and mixed with a chemical binder and a catalyst in predetermined batches.

2. Material according to claim 1, **characterized in that** said chemical binder is an epoxy resin.

3. Material according to claim 1, **characterized in that** said chemical binder is a polyester resin.

4. Material according to claim 1, **characterized in that** it comprises a preset quantity of pumice stone.

5. Material according to claim 1, **characterized in that** the marble is white marble powdered in the form of talc or "impalpable powder".

6. Material according to claims 1 and 2, **characterized in that** it has the following compositions in weight percentage terms: powdered stone = 20-35%, powdered marble = 50-65%, epoxy resin = 10%, catalyst = 5%.

7. Material according to claims 1, 2 and 4, **characterized in that** it has the following compositions in weight percentage terms: pumice stone = 15-25%, powdered marble = 60-70%, epoxy resin = 10%, catalyst = 5%.

8. Material according to claims 1 and 3, **characterized in that** it has the following compositions in weight percentage terms: powdered stone = 27-40%, powdered marble = 45-55%, polyester resin = 16-18%, catalyst = 0,6-0,7%.

9. Material according to claims 1, 3 and 4, **characterized in that** it has the following compositions in weight percentage terms: pumice stone = 15-25%, powdered marble = 58-68%, polyester resin = 15%-17%, catalyst = 0,6-0,7%.
